# EUROPEAN PATENT APPLICATION

(11) **EP 1 855 373 A2**
(43) Date of publication of application: **14.11.2007**
(21) Application number: 07106046.1
(22) Date of filing: 12.04.2007
(51) Int. Cl.: H02M 1/00

(54) **DC-DC Converter**

(30) Priority: 21.04.2006 GB 0607959
(71) Applicant: ITM Power (Research) Limited, Wendens Ambo Saffron Walden CB11 4JX (GB)
(72) Inventor: Byrne, Anthony John, Thatcham, Berkshire RG18 9RJ (GB); Bourne, Simon, c/o ITM Power plc, Sheffield, South Yorkshire S9 1XU (GB)
(74) Representative: Perry, Robert Edward

(57) **Abstract**

A dc-dc converter comprising a power conversion circuit (3) for converting an input voltage (Vin) to an output voltage (Vout) is described. A control circuit (7) is adapted to drive the power conversion circuit so as to produce the output voltage at a predetermined magnitude. The dc-dc converter further comprises an auxiliary power supply (8) adapted to supply sufficient power to the control circuit so as to enable it to drive the power conversion circuit when the output voltage is below a predefined threshold.

## Description

This invention relates to dc-dc converters.

Dc-dc converters are widely used in many different fields, for example computer power supplies, power supplies for mobile phone battery chargers and many other areas.

Broadly speaking, there are three main types of dc-dc converter. These are the buck converter which converts an input voltage to an output voltage of lower magnitude, the boost converter which converts an input voltage to a higher output voltage, and a buck-boost converter which converts an input voltage to an output voltage which may be either lower or higher in magnitude than the input voltage.

These types of converter divert energy into an energy storage device, typically an inductor, during one part of a cycle of operation and release this energy to the load during the remainder of the cycle. The relationship between the input voltage and output voltage is controlled by adjusting the duty cycle of closure of a switch which determines whether energy is diverted into the energy storage device or is released to the load. Thus, by controlling the duty cycle of closure of the switch it is possible to control the amount of the cycle used for energy storage and the amount used for energy release.

A typical dc-dc converter comprises a power conversion circuit with a switch for controlling the energy storage by the energy storage device and energy release to the load, and a control circuit for monitoring the output voltage and adjusting the duty cycle to maintain this at a predetermined magnitude.

The switches used in dc-dc converters are typically semiconductor devices because these can be conveniently and rapidly switched electronically. However, a problem exists when very low input voltages are used by the dc-dc converter. This is because the supply for the control circuit is normally taken directly from the input voltage. If this is at a low level then there may be insufficient voltage to cause a semiconductor switch to turn fully on and so the switch represents a significant resistance. A large amount of power may therefore be dissipated in the switch, which can lead to its destruction.

In accordance with the present invention, there is provided a dc-dc converter comprising a power conversion circuit for converting an input voltage to an output voltage; and a control circuit adapted to drive the power conversion circuit so as to produce the output voltage at a predetermined magnitude; characterised in that the dc-dc converter further comprises an auxiliary power supply adapted to supply sufficient power to the control circuit so as to enable it to drive the power conversion circuit when the output voltage is below a predefined threshold.

Hence, the invention overcomes the deficiency of the prior art because the auxiliary power supply is able to generate power at a sufficient voltage for the correct operation of the semiconductor switch even when the input voltage is at a very low level.

The auxiliary power supply may comprise a voltaic cell or a fuel cell in use. Other possibilities include capacitors and solar cells. The voltaic cell or fuel cell acts as the source of power for the control circuit. Indeed, if the voltaic cell or fuel cell supplies power at the correct voltage then the auxiliary power supply may require no further components and so this represents a very simple way of constructing the required auxiliary power supply.

However, it is advantageous if, instead of using a voltaic cell or fuel cell, the auxiliary power supply is coupled to the input voltage. This arrangement dispenses with the need to replace the voltaic cell or replenish the supply of fuel to the fuel cell.

Typically, the auxiliary power supply comprises a boost converter. This is advantageous because a boost converter may be made to be highly efficient, leading to little additional energy loss in the boost converter. The overall efficiency is only slightly affected.

The auxiliary power supply may be further adapted to supply sufficient power to the control circuit so as to enable it to drive the power conversion circuit when the output voltage is above the predefined threshold.

Alternatively, the dc-dc converter may further comprise a power routing circuit adapted to couple the output voltage to the control circuit when the output voltage is above the defined threshold. In this case, the control circuit may be adapted to inhibit operation of the auxiliary power supply when the output voltage is above the preferred threshold. This allows the efficiency of the circuit to be improved when stable operation has been reached. This is because although the auxiliary power supply may be very efficient (for example, if a boost converter is used) it still consumes an appreciable amount of power. It is unnecessary to maintain this situation once stable operating conditions have been reached.

In a first variant, the power routing circuit may comprise a first diode for coupling an output of the auxiliary power supply to a power supply input of the control circuit when the output voltage is below the predefined threshold; and a second diode for coupling the output voltage to the power supply input of the control circuit when the output voltage is above the predefined threshold.

In a second variant, the power routing circuit may comprise a first switch operable to couple an output of the auxiliary power supply to a power supply input of the control circuit; and a second switch operable to couple the output voltage to the power supply input of the control circuit. The control circuit may then be further adapted to cause the first switch to decouple the output of the auxiliary power supply from the power supply input of the control circuit and to cause the second switch to couple the output voltage of the power supply input of the control circuit when the output voltage is above the predefined threshold.

The power routing circuit may be further adapted to couple the input voltage to the control circuit when the output voltage is above the predefined threshold and the input voltage exceeds the output voltage.

In this case and when the first variant of the power routing circuit is used, the power routing circuit may further comprise a third diode for coupling the input voltage to the power supply input of the control circuit when the output voltage is above the predefined threshold and the input voltage exceeds the output voltage.

Alternatively, when the second variant of the power routing circuit is used, the power routing circuit may further comprise a third switch operable to couple the input voltage to the power supply input of the control circuit; and the control circuit may be further adapted to cause the first and second switches to decouple the output of the auxiliary power supply and the output voltage respectively from the power supply input of the control circuit and to cause the third switch to couple the input voltage to the power supply input of the control circuit when the output voltage is above the predefined threshold and the input voltage exceeds the output voltage.

The control circuit may be adapted to inhibit operation of the power conversion circuit when the input voltage falls below a shutdown threshold.

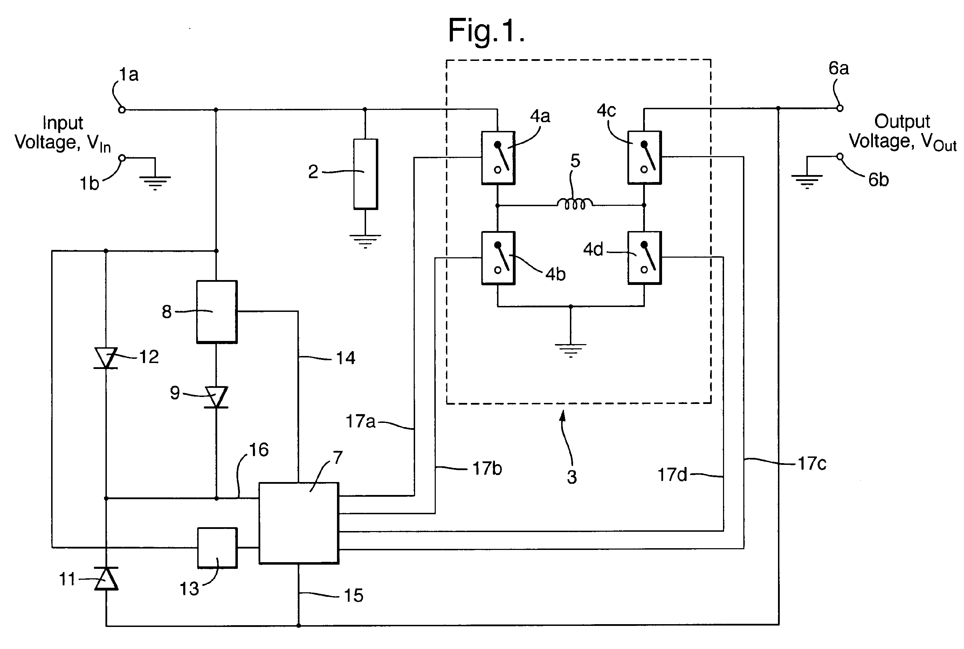

An embodiment of the invention will now be described with reference to the accompanying drawing, Figure 1, which shows a block diagram of a dc-dc converter embodying the invention.

Figure 1 shows a pair of input terminals 1 a, 1 b which are coupled in use to an input power source. This may be a battery, a fuel cell, a dc supply derived from a mains power supply or any other dc power source.

A first one of the input terminals 1 a is electrically coupled to a bar graph display 2. This comprises a bar graph display driver connected to an array of LEDs disposed in a row so as to represent a bar in a bar graph. The bar graph display driver is operable to light a certain quantity of the LEDs depending on the magnitude of the input voltage. For example, it may comprise ten LEDs and light each one in succession as the input voltage rises by an additional two volts.

The second input terminal 1 b is connected to ground.

The first input terminal 1 a is also electrically connected to a switch 4a in power conversion circuit 3. Power conversion circuit 3 comprises four switches 4a to 4d. Each switch 4a to 4d is controlled by a respective control signal on signal lines 17a to 17d generated by a control circuit 7. Switch 4a is operable to connect the input terminal 1 a to the first terminal of an inductor 5. Switch 4b is operable to connect the first terminal of inductor 5 to ground. Switch 4d connects the second terminal of inductor 5 to ground and switch 4c connects the second terminal of inductor 5 to an output terminal 6a. Another output terminal 6b is provided which is connected to ground.

Typically the switches 4a to 4c will be MOSFETs, such as the Si7884DP from Vishay Semiconductors.

As already mentioned, control circuit 7 controls the switching of each of switches 4a to 4d. A suitable control circuit may be made using the LTC3780 high-efficiency, synchronous, 4-switch buck-boost controller from Linear Technology. The control circuit 7 is able to control the switches 4a to 4b in one of three modes: a buck mode when the input voltage on input terminals 1 a and 1 b exceeds the output voltage on output terminals 6a and 6b, a buck-boost mode when the input voltage is close in value to the output voltage and a boost mode when the input voltage is less than the output voltage. The particular manner in which control circuit 7 produces appropriate control signals on signal lines 17a to 17d is not important for an appreciation of the invention, which is concerned with how power can be supplied to control circuit 7 to ensure that these control signals are capable of causing switches 4a to 4d to switch properly.

The control circuit 7 is electrically connected, by a signal line 15, to the output voltage terminal 7a so that the output voltage can be monitored in a feedback loop. The control circuit 7 adjusts the duty cycle and sequence of switching of switches 4a to 4d so as to ensure that the output voltage remains at the desired value, irrespective of changes in the input voltage.

Typically, in a prior art circuit, the control circuit 7 would be provided with power directly from the input voltage terminals 1 a and 1 b. However, as has been already explained, when the input voltage on terminals 1 a and 1 b falls to a low value control circuit 7 will be unable to supply sufficient voltage to cause switches 4a to 4d to switch on and off properly. As a result, the switches 4a and 4d remain resistive whilst passing current and a large amount of power may be dissipated by them as a result. This can ultimately lead to their destruction.

In order to overcome this problem, a special power supply arrangement is provided for the control circuit. This comprises an auxiliary converter 8 electrically connected to the input voltage terminal 1 a and, through diode 9, to the power supply input of control circuit 7. Auxiliary converter 8 is typically a boost converter which acts to increase the low value of voltage present at the input voltage terminals 1 a and 1 b to a level suitable for switching switches 4a to 4d so that control circuit 7 can fulfil its purpose. A suitable boost converter, such as the MAX669 device from MAXIM Semiconductor, can be used for auxiliary converter 8.

Auxiliary converter 8 therefore provides power, via power supply line 16, to control circuit 7 during the initial start up period of the converter. When the proper output voltage has been established on terminals 6a and 6b there is no longer any need to use auxiliary converter 8, although it could continue to be used if desired for simplicity's sake.

However, since it represents an overall inefficiency, it is desirable to shut it down and power up control circuit 7 via the output voltage instead. This is achieved by control circuit 7 asserting a signal, on signal line 14, indicating that the output voltage is at the correct value which causes auxiliary converter 8 to shut down.

The output voltage is therefore connected, via diode 11, to the control circuit 7. Diode 9 is reversed biassed and prevents any application of output voltage to the auxiliary converter 8.

Control circuit 7 however needs to be able to monitor which is the higher of the input and output voltage so that it can switch to buck mode when the input voltage exceeds the output voltage. To do this the control circuit 7 determines which is the higher of the output voltage monitored on signal line 15 and the voltage supplied to control circuit 7 on power supply line 16. It cannot do this if it is powered by the output voltage because the voltage on both signal line 15 and power supply line 16 will be the same. To solve this problem, the input voltage is also coupled via diode 12 to control circuit 7. In this way, the higher of the output voltage and input voltage is caused to power control circuit 7 because either one of diodes 11 and 12 will be reversed biassed.

A sensor 13 is provided which monitors the input voltage and asserts a shut down signal should this fall below a preset threshold, for example 2 volts. This shut down signal prevents control circuit 7 from producing the control signals for switches 4a to 4d and thereby causes the converter to shut down. This is desirable so that the converter can be safely shut down before the input voltage drops to a low enough level where auxiliary converter 8 no longer functions properly which could lead to overheating and destruction of any of the switches 4a to 4d.

## Claims

1. A dc-dc converter comprising a power conversion circuit for converting an input voltage to an output voltage; and a control circuit adapted to drive the power conversion circuit so as to produce the output voltage at a predetermined magnitude; **characterised in that** the dc-dc converter further comprises an auxiliary power supply adapted to supply sufficient power to the control circuit so as to enable it to drive the power conversion circuit when the output voltage is below a predefined threshold.

2. A dc-dc converter according to claim 1, wherein the auxiliary power supply comprises a voltaic cell in use.

3. A dc-dc converter according to claim 1, wherein the auxiliary power supply comprises a fuel cell in use.

4. A dc-dc converter according to claim 1, wherein the auxiliary power supply is coupled to the input voltage.

5. A dc-dc converter according to any of the preceding claims, wherein the auxiliary power supply comprises a boost converter.

6. A dc-dc converter according to any of the preceding claims, wherein the auxiliary power supply is further adapted to supply sufficient power to the control circuit so as to enable it to drive the power conversion circuit when the output voltage is above the predefined threshold.

7. A dc-dc converter according to any of claims 1 to 5, further comprising a power routing circuit adapted to couple the output voltage to the control circuit when the output voltage is above the predefined threshold.

8. A dc-dc converter according to claim 7, wherein the control circuit is adapted to inhibit operation of the auxiliary power supply when the output voltage is above the predefined threshold.

9. A dc-dc converter according to claim 7 or claim 8, wherein the power routing circuit comprises a first diode for coupling an output of the auxiliary power supply to a power supply input of the control circuit when the output voltage is below the predefined threshold; and a second diode for coupling the output voltage to the power supply input of the control circuit when the output voltage is above the predefined threshold.

10. A dc-dc converter according to claim 7 or claim 8, wherein the power routing circuit comprises a first switch operable to couple an output of the auxiliary power supply to a power supply input of the control circuit; and a second switch operable to couple the output voltage to the power supply input of the control circuit; and wherein the control circuit is further adapted to cause the first switch to decouple the output of the auxiliary power supply from the power supply input of the control circuit and to cause the second switch to couple the output voltage to the power supply input of the control circuit when the output voltage is above the predefined threshold.

11. A dc-dc converter according to any of claims 7 to 10, wherein the power routing circuit is further adapted to couple the input voltage to the control circuit when the output voltage is above the predefined threshold and the input voltage exceeds the output voltage.

12. A dc-dc converter according to claim 11 when dependent on claim 9, wherein the power routing circuit further comprises a third diode for coupling the input voltage to the power supply input of the control circuit when the output voltage is above the predefined threshold and the input voltage exceeds the output voltage.

13. A dc-dc converter according to claim 11 when dependent on claim 10, wherein the power routing circuit further comprises a third switch operable to couple the input voltage to the power supply input of the control circuit; and wherein the control circuit is further adapted to cause the first and second switches to decouple the output of the auxiliary power supply and the output voltage respectively from the power supply input of the control circuit and to cause the third switch to couple the input voltage to the power supply input of the control circuit when the output voltage is above the predefined threshold and the input voltage exceeds the output voltage.

14. A dc-dc converter according to any of the preceding claims, wherein the control circuit is adapted to inhibit operation of the power conversion circuit when the input voltage falls below a shutdown threshold.
